# EUROPÄISCHE PATENTANMELDUNG

(11) **EP 3 839 353 A1**
(43) Veröffentlichungstag der Anmeldung: **23.06.2021**
(21) Anmeldenummer: 20209975.0
(22) Anmeldetag: 26.11.2020
(51) Int. Cl.: F24C 7/08, H05B 6/12

(54) **VERFAHREN ZUM BETRIEB EINES KOCHGERÄTS UND KOCHGERÄT**

(30) Priorität: 17.12.2019 DE 102019219808
(71) Anmelder: E.G.O. Elektro-Gerätebau GmbH, 75038 Oberderdingen (DE)
(72) Erfinder: Egenter, Christian, 75015 Bretten (DE); Frank, Marcus, 75056 Sulzfeld (DE); Münzner, Frank, 56479 Willingen (DE); Schmidt, Kay, 75038 Oberderdingen (DE); Berner, Jonathan, 71665 Vaihingen an der Enz (DE)
(74) Vertreter: Patentanwälte Ruff, Wilhelm, Beier, Dauster & Partner mbB

(57) **Zusammenfassung**

Bei einem Verfahren zum Betrieb eines Kochfelds mit einem Smartphone als externe Bedieneinrichtung wird eine Präsenz einer Bedienperson nahe am Kochfeld abgefragt, was durch einen Präsenzsensor oder durch Bedienelemente am Kochfeld selbst erfolgen kann. Ist die Bedienperson am Kochfeld präsent, dann werden sämtliche Bedienbefehle vom Smartphone am Kochfeld umgesetzt. Sobald die Präsenz der Bedienperson am Kochfeld nicht mehr erfasst werden kann, werden entweder keine Bedienbefehle vom Smartphone mehr umgesetzt oder nur solche Bedienbefehle, mit denen eine Leistung einer Heizeinrichtung des Kochfelds reduziert wird.

## Beschreibung

### Anwendungsgebiet und Stand der Technik

Die Erfindung betrifft ein Verfahren zum Betrieb eines Kochgeräts mit einer externen Bedieneinrichtung sowie ein dafür ausgebildetes Kochgerät, wobei das Kochgerät mindestens eine Heizeinrichtung und eine Steuereinrichtung aufweist sowie mindestens eine Präsenzsensoreinrichtung, um eine Präsenz einer Bedienperson am Kochgerät erkennen zu können.

Es ist aus der DE 10 2013 214 929 A1 bekannt, ein Kochfeld als Kochgerät mit einem mobilen Endgerät als externe Bedieneinrichtung zu bedienen. So können mehrere Bedienpersonen an dem Kochfeld arbeiten bzw. kochen, und das Kochen kann sozusagen auch geselliger gestaltet werden. Unterschiedliche Bedienmöglichkeiten sowie eine Verteilung eines Vorrangs zwischen einer Steuereinrichtung am Kochfeld und der externen Bedieneinrichtung sind dabei möglich, so wie es als praxistauglich angesehen wird.

### Aufgabe und Lösung

Der Erfindung liegt die Aufgabe zugrunde, ein eingangs genanntes Verfahren zum Betrieb eines Kochgeräts sowie ein zu dessen Durchführung geeignetes Kochgerät zu schaffen, mit denen Probleme des Standes der Technik gelöst werden können und es insbesondere möglich ist, ein Kochgerät mit einer solchen externen Bedieneinrichtung einfach und sicher sowie zuverlässig und praxistauglich bedienen zu können.

Gelöst wird diese Aufgabe durch ein Verfahren mit den Merkmalen des Anspruchs 1 sowie durch ein Kochgerät mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Kochgerät beschrieben. Sie sollen jedoch unabhängig davon sowohl für das Verfahren als auch für das Kochgerät selbstständig und unabhängig voneinander gelten können. Der Wortlaut der Ansprüche wird durch ausdrückliche Bezugnahme zum Inhalt der Beschreibung gemacht.

Das Kochgerät weist mindestens eine Heizeinrichtung, vorteilhaft mehrere Heizeinrichtungen, eine an sich übliche Steuereinrichtung, vorteilhaft eine eigene Bedieneinrichtung mit Bedienelementen und eine Kommunikationseinrichtung auf, die bevorzugt drahtlos ausgebildet ist. Des Weiteren ist mindestens eine Präsenzsensoreinrichtung vorgesehen, die entweder in dem Kochgerät angeordnet ist, insbesondere als Bestandteil des Kochgeräts. Alternativ oder zusätzlich kann eine Präsenzsensoreinrichtung auch außerhalb davon angeordnet sein, aber mit dem Kochgerät signalübertragend verbunden sein. Diese signalübertragende Verbindung kann über die Kommunikationseinrichtung des Kochgeräts erfolgen oder auch auf anderem Weg. Des Weiteren sind die mindestens eine Präsenzsensoreinrichtung bzw. alle Präsenzsensoreinrichtungen und die Kommunikationseinrichtung mit der Steuereinrichtung verbunden. Die Steuereinrichtung ist unter anderem dazu ausgebildet, eine Leistungszufuhr zu der Heizeinrichtung zu steuern. Dabei kann sie insbesondere über an sich bekannte Leistungsschalter die Heizeinrichtung auf gewünschte bzw. vorgegebene Art und Weise steuern, insbesondere an- und ausschalten sowie eine Leistungserzeugung in der Höhe einstellen.

Das Verfahren weist erfindungsgemäß die folgenden Schritte auf. Zuerst wird das Kochgerät eingeschaltet oder ist bereits eingeschaltet, beispielsweise auch nach einem vorhergehenden Kochvorgang. Dann stellt eine Bedienperson direkt an dem Kochgerät bzw. dessen vorgenannter Bedieneinrichtung einen Fernbedien-Modus ein für mindestens eine Heizeinrichtung als Eingabemöglichkeit für die vorgenannte externe Bedieneinrichtung. Diese externe Bedieneinrichtung ist nach Art einer Fernbedienung mit der Kommunikationseinrichtung verbunden bzw. wirkt mit dieser zusammen, insbesondere drahtlos per Funk. So kann die externe Bedieneinrichtung Bedienbefehle an die Kommunikationseinrichtung und somit an die Steuereinrichtung senden, damit diese dann von der Steuereinrichtung durchgeführt werden, insbesondere durch einen Betrieb bzw. geänderten Betrieb der Heizeinrichtung. Die externe Bedieneinrichtung kann dabei eine spezielle Bedieneinrichtung nur für dieses Kochgerät oder für eine Familie von Kochgeräten sein, also für diesen speziellen Zweck. Alternativ kann es ein vorgenanntes mobiles Endgerät wie ein Mobiltelefon oder ein Tablet-Computer sein. Vorteilhaft ist die externe Bedieneinrichtung dabei drahtlos mit der Kommunikationseinrichtung verbunden. Die Präsenzsensoreinrichtung erfasst dabei die Präsenz der Bedienperson an dem Kochgerät oder nahe dem Kochgerät, also ob die Bedienperson am Kochgerät ist. Dabei wird eine Entfernung zwischen der Bedienperson und dem Kochgerät bzw. der Präsenzsensoreinrichtung, die weniger als 5 m oder weniger als 3 m beträgt, als Präsenz der Bedienperson an dem Kochgerät gewertet. Somit kann unter dieser Bedingung bei einer Entfernung unter den genannten Angaben davon ausgegangen werden, dass sich die Bedienperson an dem Kochgerät befindet und dessen Betrieb und Betriebszustand überwacht. Dies ist wichtig falls eine mögliche kritische Situation eintritt, beispielsweise ein Überkochen von Gargut oder ein Anbrennen von Gargut oder ein Entflammen von Fett oder Öl.

In einem 1. Fall gilt, dass eine Präsenz der Bedienperson an dem Kochgerät erfasst wird, die vorgenannte Entfernung also unterschritten ist. Eine Bedienperson ist dann am oder nahe bei dem Kochgerät. Somit kann von einem überwachten und gesicherten Betrieb des Kochgeräts ausgegangen werden, so dass ein Bedienen des Kochgeräts mittels der externen Bedieneinrichtung möglich ist. Die Bedienperson, ggf. mit der externen Bedieneinrichtung, ist also am Kochgerät und kann eine vorgenannte möglicherweise problematische oder gefährliche Situation erkennen und einschätzen bzw. durch Eingreifen verhindern.

In einem anderen zweiten Fall gilt, dass keine Präsenz der Bedienperson an dem Kochgerät erfasst wird. Sie ist also nicht in der Nähe bzw. befindet sich nicht in einer Entfernung unterhalb der vorgenannten Entfernung. Somit kann sie den Betrieb und eine Situation an dem Kochgerät auch nicht gesichert überwachen bzw. erkennen. Diese fehlende Präsenz der Bedienperson an dem Kochgerät wird von der Präsenzsensoreinrichtung erfasst. In diesem zweiten Fall werden keine neuen Bedienbefehle bzw. keine neuen oder veränderten Bedienbefehle der externen Bedieneinrichtung mehr von der Steuereinrichtung ausgeführt, mit denen eine Leistung einer Heizeinrichtung des Kochgeräts erhöht werden soll, also eine Steigerung der Gefahr eintreten könnte.

Dies gilt vorteilhaft für den Moment der Befehlseingabe. Ist danach keine Präsenz der Bedienperson am Kochgerät gegeben, so werden keine neuen Bedienbefehle bzw. keine neuen oder veränderten Bedienbefehle der externen Bedieneinrichtung mehr von der Steuereinrichtung ausgeführt, mit denen eine Leistung einer Heizeinrichtung des Kochgeräts erhöht werden soll. Wenn die Präsenz kurz vor Befehlseingabe oder kurz nach Befehlseingabe wegfällt spielt das keine Rolle mehr, das soll vorteilhaft unbeachtet bleiben. Mittels der Erfassung der Präsenz wird sozusagen nur für den Moment und nicht für die ganze Dauer eines Garverfahrens geprüft, ob die Bedienperson präsent ist.

Somit ist in diesem zweiten Fall vorgesehen, dass eine möglicherweise gegebene Gefahrensituation zumindest nicht kritischer oder verschlimmert wird mittels Bedienung an der externen Bedieneinrichtung. Ein Reduzieren einer Leistung einer Heizeinrichtung des Kochgeräts oder deren Ausschalten kann mittels der externen Bedieneinrichtung dann immer noch möglich sein. Eine derartige externe Bedienung beseitigt eine mögliche Gefahrensituation zwar nicht oder nicht vollständig, hilft aber, diese zumindest zu reduzieren, ggf. deutlich zu reduzieren. Somit kann eine solche Bedienung noch akzeptiert und umgesetzt werden von der Steuereinrichtung, selbst wenn keine Präsenz der Bedienperson am Kochgerät in diesem Moment bzw. zu diesem Zeitpunkt der Bedienung mehr erfasst wird.

Somit wird mit der Erfindung erreicht, dass eine Bedienung, die eine Gefahrensituation an dem Kochgerät verstärken könnte, nur möglich ist, wenn dabei eine Präsenz der Bedienperson am Kochgerät erfasst wird. Gleichzeitig muss aber nicht zwingend das Kochgerät abgeschaltet werden oder die externe Bedieneinrichtung vollständig deaktiviert werden, wenn sich die Bedienperson nicht mehr ausreichend nahe am Kochgerät befindet bzw. keine Präsenz mehr erfasst wird. Dadurch ist ein sehr komfortabler und gleichzeitig praxistauglicher sowie sicherer Betrieb des Kochgeräts mittels der externen Bedieneinrichtung möglich.

In einer möglichen Ausgestaltung der Erfindung kann allgemein vorgesehen sein, dass eine Bedienung direkt am Kochgerät mit Vorrang vor einer Bedienung mittels der externen Bedieneinrichtung ausgeführt wird. Dies basiert unter anderem darauf, dass zur direkten Bedienung am Kochgerät mittels dessen Bedieneinrichtung die Bedienperson ja auf alle Fälle am Kochgerät präsent ist, somit also keinerlei Sicherheitsbedenken bestehen. Des Weiteren muss zumindest ein Reduzieren der Leistung einer Heizeinrichtung, deren Abschalten oder das Abschalten des gesamten Kochgeräts am Kochgerät selbst immer möglich sein, insbesondere auch im Falle einer vorgenannten möglichen Gefahrensituation.

In nochmals weiterer Ausgestaltung der Erfindung kann die Entfernung, bis zu der eine Präsenz der Bedienperson am Kochgerät als vorhanden gilt, am Kochgerät selbst eingestellt werden. Dies kann entweder bei der ersten Installation des Kochgeräts erfolgen oder aber auch nachträglich. Damit kann beispielsweise einer bestimmten Einbausituation des Kochgeräts in einer Küche Rechnung getragen werden, was dort als maximale Entfernung angesehen werden kann, und was unter einer Präsenz der Bedienperson an der Bedieneinrichtung im Sinne einer möglichen Beaufsichtigung des Kochgeräts zu verstehen ist. Eine solche Entfernung kann bis zu maximal 5 m oder sogar maximal 10 m betragen, da ab dieser Entfernung nicht mehr zwingend sichergestellt werden kann, dass eine Bedienperson einen Vorgang am Kochgerät tatsächlich im Einzelnen und genau überwachen kann.

In weiterer Ausgestaltung der Erfindung ist es möglich, dass in dem vorgenannten zweiten Fall, wenn also keine Präsenz der Bedienperson an dem Kochgerät mehr erfasst wird, als Bedienbefehl der externen Bedieneinrichtung von der Steuereinrichtung nur noch eine Verringerung der Leistung einer Heizeinrichtung bzw. der mit dieser externen Bedieneinrichtung bedienten oder gesteuerten Heizeinrichtung zugelassen und ausgeführt wird. Somit ist es beispielsweise möglich, dass sich eine Bedienperson mit der externen Bedieneinrichtung in der Hand von dem Kochgerät entfernt und ihre Präsenz nicht mehr in ausreichendem Maß am Kochgerät festgestellt wird. Dann können, falls die Kommunikationseinrichtung dies erkennt, immer noch Bedienbefehle von der externen Bedieneinrichtung an das Kochgerät gegeben werden, mit denen eine Leistung einer Heizeinrichtung reduziert wird oder diese Heizeinrichtung sogar ganz abgeschaltet wird. Schließlich ist dies ein Vorgang, der ein mögliches Risiko bzw. eine mögliche Gefahr am Kochgerät zwingend reduziert, weswegen er eben noch möglich ist.

In Ausgestaltung der Erfindung kann vorgesehen sein, dass im vorgenannten zweiten Fall eine Leistung der Heizeinrichtung automatisch von der Steuereinrichtung reduziert wird, wenn die Präsenzsensoreinrichtung keine Präsenz der Bedienperson am Kochgerät mehr feststellt. Dies kann als aktive Sicherheitsmaßnahme durchgeführt werden. Eine solche automatische Reduzierung der Leistung kann um mindestens 20% bis 50% erfolgen oder auf 1% oder 10% bis 50% der Maximalleistung der Heizeinrichtung erfolgen. Nach einer solchen Reduzierung der Leistung der Heizeinrichtung kann davon ausgegangen werden, dass keine akute Gefahr mehr an der Heizeinrichtung entstehen kann oder vorliegt. Gleichzeitig wird ein aufgestelltes Kochgefäß mit Gargut darin zumindest noch warm gehalten als Kompromiss zwischen Sicherheit und einem gewünschten Ergebnis eines Garvorgangs. Diese Werte können möglicherweise zusätzlich auch noch davon abhängen, ob die Heizeinrichtung mit einer geringen Leistung, einer mittleren Leistung oder einer sehr hohen bzw. ihrer maximalen Leistung betrieben worden ist.

In weiterer Ausgestaltung der Erfindung kann dann, wenn nach Unterbrechung der Präsenz der Bedienperson am Kochgerät als vorgenannter zweiter Fall erneut eine Präsenz der Bedienperson am Kochgerät festgestellt wird, wenn also wieder der erste Fall vorliegt, nach zwei Möglichkeiten vorgegangen werden. Gemäß einer ersten Möglichkeit kann dann direkt ein vorheriger Betriebszustand des Kochgeräts bzw. der mit der externen Bedieneinrichtung bedienten Heizeinrichtung eingestellt werden, wie er bei Eintritt des zweiten Falls geherrscht hat, als festgestellt worden ist, dass die Bedienperson nicht mehr am Kochgerät präsent ist. Somit wird automatisch der vorherige Betriebszustand eingenommen.

Gemäß einer zweiten Möglichkeit kann vorgesehen sein, dass zuerst eine neue Bedienung zur Bestätigung durch die Bedienperson notwendig ist, welche dann vorzugsweise an dem Kochgerät bzw. an dessen Bedieneinrichtung erfolgen sollte. Erst dann kann der vorherige Betriebszustand des Kochgeräts bzw. der Heizeinrichtung wiederhergestellt werden, wie er zuvor geherrscht hat, bzw. eine Leistung erhöht werden. Hierfür kann eine entsprechende Information als Aufforderung und/oder zur Bestätigung an die Bedienperson gegeben werden, so dass diese explizit darauf hingewiesen wird, dass aufgrund der mangelnden Präsenz eine Unterbrechung des gewünschten Kochvorgangs stattgefunden hat und nun eben nach Bestätigung wieder fortgesetzt werden kann. Somit wird gemäß der zweiten Möglichkeit eine nochmals höhere Sicherheit geschaffen, dass eine Bedienperson aktiv tätig werden muss, um den Betrieb wieder aufnehmen oder fortsetzen zu können, was dann aber auch möglich ist.

In einer ersten Ausgestaltung der Erfindung ist es möglich, dass die genannte mindestens eine Präsenzsensoreinrichtung direkt an oder in dem Kochgerät angeordnet ist, so dass ein elektrischer Anschluss sehr einfach ist. Eine im Kochgerät integrierte Präsenzsensoreinrichtung kann zum Erfassen einer Bedienung durch eine Bedienperson und/oder einer Veränderung einer Position und/oder eines Gewichts eines aufgestellten Kochgeschirrs oder zum Erkennen von Personen und/oder Bewegungen im Bereich um das Kochgerät vorgesehen sein. Sie kann als Bewegungssensor, als kapazitiver Näherungssensor oder als Reflexlichtschranke oder als Radarsensor ausgebildet sein. Alternativ kann die Präsenzsensoreinrichtung auch eine Funktionseinrichtung am Kochgerät selbst sein oder eine solche überwachen, beispielsweise ein Topferkennungssensor oder ein Gewichtssensor an einer Kochfeldplatte eines Kochfelds, die eine Bedienung bzw. allgemein eine Aktion der Bedienperson am Kochgerät erfassen. Eine solche Aktion am Kochgerät bedeutet dann natürlich auch zwingend, dass die Bedienperson präsent am Kochgerät ist bzw. genau davor steht. Auch eine Bedienung an der vorgenannten Bedieneinrichtung des Kochgeräts kann die Präsenzsensoreinrichtung oder eine der Präsenzsensoreinrichtungen bilden oder sie explizit auslösen.

In einer zweiten Ausgestaltung der Erfindung ist es möglich, dass die genannte mindestens eine Präsenzsensoreinrichtung nicht direkt in oder am Kochgerät angeordnet ist, sondern separat davon. Dann kann sie ein Näherungssensor, eine optische Überwachungseinrichtung wie eine Videokamera oder ein Bewegungsmelder odgl. sein. Sie kann vorteilhaft in einem Abstand von weniger als 3 m Entfernung zu dem Kochgerät angeordnet sein. Gemäß einer Möglichkeit kann die Präsenzsensoreinrichtung tatsächlich den Abstand einer Bedienperson zum Kochgerät erfassen, insbesondere wenn es eine Kamera odgl. ist. Gemäß einer anderen Möglichkeit kann die Präsenzsensoreinrichtung relativ nahe am Kochgerät angeordnet sein und einen Abstand der Bedienperson zu sich erfassen, der dann eben als Abstand zu dem Kochgerät selbst gewertet wird. Die Präsenzsensoreinrichtung kann zwar grundsätzlich auch mit einem Kabel mit dem Kochgerät bzw. dessen Steuereinrichtung verbunden sein. Vorteilhaft ist eine Verbindung aber drahtlos über die vorgenannte Kommunikationseinrichtung möglich.

In weiterer Ausgestaltung der Erfindung ist es möglich, dass mit der externen Bedieneinrichtung genau eine einzige Heizeinrichtung oder Funktionseinrichtung des Kochgeräts gesteuert werden kann. Hierzu kann davor eine explizite Zuordnung der externen Bedieneinrichtung zu genau dieser Heizeinrichtung oder Funktionseinrichtung erfolgen. Dann könnte in einem anderen Verfahren oder in einem anderen Abschnitt dieses Verfahrens mit der externen Bedieneinrichtung auch eine andere Heizeinrichtung oder Funktionseinrichtung dieses Kochgeräts gesteuert werden.

In einer anderen Ausgestaltung der Erfindung können mit der externen Bedieneinrichtung mehrere Heizeinrichtungen oder Funktionseinrichtungen des Kochgeräts gesteuert werden. Auch hier ist vorteilhaft eine zuvor beschriebene explizite Zuordnung der externen Bedieneinrichtung zu genau diesen Heizeinrichtungen oder Funktionseinrichtungen möglich, welche auch verändert werden kann.

In nochmals weiterer Ausgestaltung der Erfindung kann mit der externen Bedieneinrichtung das gesamte Kochgerät gesteuert werden. Auch dies kann zuvor zugeordnet bzw. eingestellt werden. Dabei sollte es in allen vorgenannten Ausgestaltungen vorteilhaft möglich sein, dass auch mit der Bedieneinrichtung des Kochgeräts selbst eine Bedienung weiterhin möglich ist. Diese Bedienung sollte dann auch jeweils Vorrang vor der Bedienung mit der externen Bedieneinrichtung haben, insbesondere aus den zuvor erläuterten Sicherheitsüberlegungen. Bei einer Bedienung direkt am Kochgerät hat eine Bedienperson auf alle Fälle einen besseren Überblick über die Situation daran als wenn die externe Bedieneinrichtung genutzt wird.

In einer Ausbildung der Erfindung kann eine Präsenz der Bedienperson am Kochgerät wiederholend bzw. wiederholt erfasst werden. Besonders vorteilhaft wird dies regelmäßig wiederholt erfasst. Ein zeitlicher Abstand einer solchen Erfassung sollte weniger als 1 min betragen, damit kein gefährlicher Zustand eintreten kann. Vorteilhaft beträgt ein zeitlicher Abstand weniger als 10 sek oder weniger als 1 sek. Eine permanente bzw. völlig lückenlose dauernde Erfassung der Präsenz wird als nicht notwendig bzw. als zu aufwendig angesehen. Es kann auch vorgesehen sein, dass eine Präsenz der Bedienperson am Kochgerät erst dann erfasst bzw. überprüft wird, wenn ein Bedienbefehl der externen Bedieneinrichtung an der Kommunikationseinrichtung eingeht bzw. empfangen wird. Erst zu diesem Zeitpunkt wird die Information über die Präsenz benötigt.

In weiterer Ausbildung der Erfindung ist es möglich, dass die Präsenzsensoreinrichtung mehrere Präsenzsensoren aufweist bzw. auf unterschiedliche Art und Weise eine Präsenz der Bedienperson am Kochgerät erfassen kann. Dies erhöht die Sicherheit. So kann vorgesehen sein, dass beispielsweise zusätzlich zu einer Kamera als Präsenzsensor eine Bedieneinrichtung als Präsenzsensor verwendet wird. Stellt diese Bedieneinrichtung innerhalb der vorgenannten zeitlichen Abstände oder zum Zeitpunkt einer Befehlseingabe eine Eingabe der Bedienperson direkt am Kochgerät fest, so braucht der andere Präsenzsensor nicht aktiviert zu werden. Vor allem ist eine solche Bedienung des Kochgeräts selbst ein sicheres und eindeutiges Zeichen dafür, dass die Bedienperson am Kochgerät präsent ist und zusätzlich auch noch dem Kochgerät seine Aufmerksamkeit widmet.

In einer grundsätzlichen Ausgestaltung kann die externe Bedieneinrichtung ein mobiles Endgerät sein, beispielsweise ein Smartphone, ein Tablet-Computer oder ein Notebook-Computer. In einer anderen grundsätzlichen Ausgestaltung der Erfindung kann die externe Bedieneinrichtung ein Funknetz, insbesondere ein sogenanntes WLAN, oder auch das Internet sein, das über die Kommunikationseinrichtung mit der Steuereinrichtung des Kochgeräts verbunden ist. So kann ein Kochprogramm am Kochgerät beispielsweise auch direkt aus dem Internet an die Steuereinrichtung bzw. an das Kochgerät gegeben werden. Insbesondere kann so eine Vielzahl von Kochprogrammen an dem Kochgerät ausgeführt werden. Für deren reibungslosen Ablauf mit vollständiger Ausschöpfung der Möglichkeiten am Kochgerät, insbesondere einer Leistung einer der Heizeinrichtungen, ist dann eben dennoch die Präsenz der Bedienperson am Kochgerät notwendig. Ansonsten könnten kritische Zustände am Kochgerät eingestellt werden bzw. auftreten, insbesondere ausgelöst durch ein solches Kochprogramm, was vermieden werden soll. In einer weiteren Ausgestaltung kann die externe Bedieneinrichtung eine sogenannte intelligente Maschine bzw. eine externe automatische Steuerung sein, die die Bedienperson beim Kochen unterstützt. Solch eine Maschine oder externe automatische Steuerung kann den Komfort für die Bedienperson steigern oder ihr im Rahmen von sogenanntem Ambient Assisted Living ein selbstständiges Kochen trotz persönlicher Einschränkungen und/oder Fähigkeiten ermöglichen, vorteilhaft auch Kochen von komplexen Gerichten.

Die Steuereinrichtung ist dazu ausgebildet, nicht nur das Kochgerät selbst zu steuern, insbesondere auch nach Bedienung einer Bedienperson an der Bedieneinrichtung des Kochgeräts selbst, sondern auch um mit dem externen Bediengerät zusammen ein erfindungsgemäßes Verfahren durchzuführen. Dies bedeutet, dass vor allem die genannten Sicherheitsmaßnahmen sozusagen in der Steuereinrichtung implementiert sind bzw. hauptsächlich von dieser durchgeführt werden.

Mit der Erfindung kann in vorteilhafter Weise das Aufrechterhalten eines Freigabezustands für die Bedienung mit dem externen Bediengerät am Kochgerät durch Erkennen einer Präsenz einer Bedienperson realisiert werden durch Sensoren im oder am Kochgerät oder in der Nähe des Kochgeräts. Dies kann insbesondere durch Auswertung der Bedienung von Bedienelementen, die nicht direkt zur Freigabe genutzt werden, und/oder von bekannten Topferkennungssensoren, die eine Veränderung ihrer Bedeckung und somit auch der Bedeckung einer zugeordneten Heizeinrichtung erkennen, und/oder von Gewichtssensoren, die durch sprungartige Veränderung das Hinzufügen von Töpfen oder von Gargut in einen Topf erkennen. Dies sind Handlungen, die von einer Bedienperson direkt am Kochgerät durchgeführt werden. Topferkennungssensoren können sowohl eine Veränderung ihrer eigenen Bedeckung und somit auch der Bedeckung einer zugeordneten Heizeinrichtung erkennen, die mit der externen Bedieneinrichtung bedient wird, als auch eine solche Veränderung bei einer anderen Heizeinrichtung, die nicht mit der externen Bedieneinrichtung bedient wird. Das sind alles Handlungen, die eine Bedienperson am Kochgerät selbst durchführt und somit zwingend die Präsenz zumindest einer Bedienperson am Kochgerät anzeigen und erkennbar machen.

Ein Kochgerät, insbesondere ein Kochfeld, das durch die Präsenz einer Bedienperson beaufsichtigt wird, kann in vorteilhafter Ausgestaltung der Erfindung seine Bedienbefehle von einer beliebigen Quelle auch über eine Funkverbindung bzw. Netzwerkverbindung allgemein aus dem Internet bzw. einer Cloud empfangen. Bedienbefehle von außen können beispielsweise auch Bedienbefehle über Assistenzsysteme wie Alexa, Apps, Cloud-Systeme, vorgenannte intelligente Maschinen, externe automatische Steuerungen odgl. sein. Eine solche Quelle steuert das Kochfeld zwar fern über oder als die externe Bedieneinrichtung, es ist aber bei Präsenz einer Bedienperson nicht mehr von einem gefährlichen Zustand auszugehen. Wenn ein gefährlicher Zustand entstehen würde, könnte eine präsente Bedienperson sofort eingreifen, beispielsweise dadurch, dass sie an der Steuereinrichtung des Kochgeräts eine Änderung vornimmt als Bedienung, vorzugsweise als Leistungsreduzierung. Diese Bedienung am Kochgerät hat, wie oben beschrieben, immer Vorrang und ist auch immer möglich. Ein Bedienbefehl kann beispielsweise auf dem Smartphone als externe Bedieneinrichtung eingegeben und erkannt werden, in der Cloud verarbeitet und dann dem Kochgerät übermittelt werden, insbesondere über das Smartphone übermittelt werden. Am Kochfeld wird zunächst geprüft, ob eine Bedienperson vor Ort ist und präsent ist, also das Kochfeld überwacht oder zumindest theoretisch überwachen kann bzw. einen gefährlichen Zustand erkennen könnte und eingreifen könnte. Ist dies der Fall, wird der Bedienbefehl an die Steuereinrichtung weitergeleitet und damit wie eine Bedienung direkt am Kochfeld behandelt. Dies wird nachfolgend anhand der Figuren noch im Detail erläutert. Wenn nun im gleichen Beispiel keine Präsenz einer Steuereinrichtung vor Ort erkannt worden ist wird der Bedienbefehl von der Steuereinrichtung ignoriert, zumindest wenn er eine Leistungserhöhung bewirken sollte, und die Steuereinrichtung macht die Bedienperson durch ein Signal darauf aufmerksam. Dieses Signal macht die Bedienperson darauf aufmerksam, dass zum Einen ihre Präsenz am Kochfeld nicht festgestellt werden konnte, und zum Anderen der Bedienbefehl nicht ausgeführt wurde. Ein solches Signal kann am Kochfeld und/oder am Smartphone ausgegeben werden.

Zusätzlich zur Präsenz einer Bedienperson kann überprüft werden, ob die externe Bedieneinrichtung zur Bedienung für dieses Kochgerät zugelassen bzw. registriert wurde. Damit kann man ausschließen, dass eine beliebige externe Bedieneinrichtung einen gültigen Bedienbefehl für das Kochgerät erzeugen kann.

In einer Ausgestaltung können Rezepte aus Datenbanken heruntergeladen werden. Diese Rezepte enthalten bereits die Leistungseinstellungen oder gesamte Temperaturprofile für das Kochgerät. Nur bei Erkennung der Präsenz einer Bedienperson werden die Vorgaben vom Kochfeld bzw. dessen Steuereinrichtung vollständig übernommen und ausgeführt.

In einer weiteren Ausgestaltung wird auf einem Kochfeld als Kochgerät ein Kochgeschirr mit eigenen Temperatursensoren verwendet. Dieses Kochgeschirr sendet seine Temperaturwerte drahtlos an eine Regeleinrichtung in der Cloud, möglicherweise über eine externe Bedieneinrichtung. Von dort kommt dann der fertig ausgearbeitete Leistungsbefehl als Bedienbefehl zur Ansteuerung einer Heizeinrichtung, mit der dieses Kochgeschirr beheizt wird. Nur bei Erkennung der Präsenz einer Bedienperson werden die Vorgaben von der Steuereinrichtung übernommen und ausgeführt. Wenn nun erkannt wird, dass eine Bedienperson nicht mehr am Kochfeld präsent ist, reagiert die Steuereinrichtung entsprechend anders auf die externen Bedienbefehle. Es nimmt keine weiteren Bedienbefehle von außen mehr an, wenn sie eine Leistungserhöhung bewirken sollen, sondern nur noch, wenn mit einem Bedienbefehl von außen eine Leistung jetzt oder später verringert werden soll. Dabei können laufende Kochprozesse, wie beispielsweise Reiskochen, weitergeführt werden, aber im Verlauf werden keine Bedienbefehle, die die Leistung erhöhen, mehr ausgeführt, sondern nur solche, die die Leistung verringern.

In einer anderen Ausgestaltung kann die Steuereinrichtung zuvor empfangene Bedienbefehle von außen gar nicht weiter fortführen, also stoppen. In einer nochmals weiteren Ausgestaltung kann sie eine zuvor über externe Bedienbefehle gesteuerte Heizeinrichtung ganz abschalten.

Für die Erkennung der Präsenz einer Bedienperson sind verschiedene Technologien anwendbar. Auf die Präsenz einer Bedienperson kann sowohl auf Basis von Sensoren im Kochfeld als auch von verifizierten Überwachungseinrichtungen in der räumlichen Umgebung um das Kochfeld herum geschlossen werden. Eine Veränderung des Zustandes einer vorgenannten Topferkennung lässt darauf schließen, dass eine Bedienperson präsent ist und Töpfe auf das Kochfeld aufgestellt bzw. abgehoben oder allgemein bewegt hat. Dies kann über übliche Sensoren für eine Topferkennung geschehen, siehe beispielsweise die DE 10305788 A1, die DE 102004016631 A1 oder die DE 102016217783 A1.

In einer weiteren Ausgestaltung kann die Bedienperson vom Kochfeld oder einem externen Eingabegerät dazu aufgefordert werden, ihre Präsenz zu bestätigen, wenn die zuvor genannten internen Präsenzerkennungseinrichtungen sie nicht erkannt haben. Die kann beispielsweise durch Anweisungen wie "Bitte bewegen Sie den gewünschten Topf!" erfolgen, die akustisch durch Sprache und/oder optisch ausgegeben werden können.

Des Weiteren kann durch Gewichtssensoren unterhalb einer Kochfeldplatte eine Gewichtsbelastung des Kochfeldes gemessen werden, siehe hierzu die DE 10353299 A1. Veränderungen dieser Gewichtsbelastung lassen auf eine Zugabe von Gargut oder Bewegungen durch die Bedienperson schließen. Zum gleichen Zweck kann anstatt des Gewichtes die Beschleunigung der Kochfeldplatte gemessen werden, also ein Aufstellen eines Kochgeschirrs. Ebenso können Bewegungsmelder beispielsweise über pyroelektrische Sensoren im Raum erkennen, dass Personen anwesend sind.

Durch eine Kamera kann ein Bild einer Küche erstellt werden und die Anwesenheit von Personen festgestellt werden, insbesondere auch in Nähe des Kochgeräts. In einer zusätzlichen Ausgestaltung kann über die Erkennung von Gesichtszügen einer Bedienperson zusätzlich unterschieden werden, ob eine zuvor registrierte und somit autorisierte Bedienperson vor dem Kochgerät ist. So kann beispielsweise vermieden werden, dass Kinder ungewollt das Kochgerät benutzen oder verstellen können. Alternativ zu einer Kamera samt optischer Auswertung können Mikrowellen, Radar oder bestehende Funkschnittstellen wie beispielsweise BLE oder auch RFID benutzt werden. Auch eine Auswertung über eine time-of-flight Sensorik ist denkbar. Berührungslose Thermosensoren sind ebenfalls denkbar. Diese können die Temperatur von Objekten erkennen und mit der Körpertemperatur des menschlichen Körpers abgleichen, um zu bestimmen, ob eine Bedienperson präsent ist.

Weiterhin kann Sprache bzw. ein Sprechen der Bedienperson erkannt werden. Beispielsweise kann ein externer Sprachassistent angeschlossen sein, der auch als Präsenzsensoreinrichtung dienen kann. Zusätzlich kann im Kochgerät ein Mikrofon integriert sein. Der externe Sprachassistent kann einen Bedienbefehl erkennen und an das Kochfeld bzw. dessen Steuereinrichtung senden. Das Mikrofon im Kochfeld erkennt lediglich ein Geräusch mit vorgegebener Dauer und Lautstärke, das diesbezüglich mit dem vom externen Sprachassistent erkannten Sprechen abgeglichen werden kann. Ein Bedienbefehl vom externen Sprachassistent kommt in unmittelbarer zeitlicher Nähe zur Erkennung am Mikrofon des Kochfeldes. Dadurch wird verifiziert, dass die Bedienperson am Kochfeld präsent ist, der Bedienbefehl vom Sprachassistenten kann also zu keinem gefährlichen Zustand des Kochfeldes führen. Im Kochfeld selbst muss dann keine ggf. aufwändige Spracherkennung integriert werden. Hier sollte zwar ausgeschlossen werden, dass eine erkannte Sprache von einem Wiedergabegerät kommt, beispielsweise einem Fernseher oder Radio. Dies ist aber durch den Abgleich zwischen Sprachassistenten und Mikrofon des Kochfeldes möglich, denn nur wenn der Sprachassistent einen sinnvollen Bedienbefehl erkennt kann er den Abgleich mit dem Mikrofon des Kochfeldes überhaupt durchführen. Ansonsten wird ja gar kein Bedienbefehl erzeugt, der dann auch nicht hinsichtlich Präsenz der Bedienperson am Kochgerät überprüft werden muss. Alternativ sind weitere Technologien für eine Erkennung einer Präsenz oder die Kombinationen aus zuvor genannten Technologien möglich. Eine Spracherkennung in einem genannten Sprachassistenten kann zusätzlich das identifizierte Sprachmuster als Daten zum Plausibilitätsabgleich an das Kochfeld senden. Das Kochfeld kann dann das erkannte Sprachmuster mit dem übermittelten Muster vom Sprachassistenten abgleichen. Das Kochfeld muss jedoch nicht selbst die Dekodierung der Sprache machen bzw. übernehmen, was aufwändig ist, sondern lediglich sein erkanntes Muster mit dem übermittelten Muster des Sprachassistenten abgleichen.

In einer weiteren Ausgestaltung können neben der reinen Präsenz einer Bedienperson zur zusätzlichen Sicherheit noch Vitalparameter einer präsenten Bedienperson bestimmt werden, beispielsweise Körpertemperatur, Bewegungsgeschwindigkeit, Aktivitätszustand bzgl. Sturzerkennung oder Herzfrequenz, um ein Qualitätskriterium für die Bedienperson zu erhalten. So kann überprüft werden, ob diese zusätzlich zu ihrer reinen Präsenz auch ausreihend aufmerksam ist bzw. sein kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schematische Darstellung eines Kochfelds als erfindungsgemäßes Kochgerät, an dem das erfindungsgemäße Bedienverfahren erläutert wird, wobei eine Präsenz einer Bedienperson nahe am Kochfeld erkannt wird, und
- Fig. 2: das Kochfeld aus Fig. 1 während des Bedienverfahrens, bei dem die Präsenz der Bedienperson am Kochfeld nicht mehr erkannt worden ist.

### Detaillierte Beschreibung der Ausführungsbeispiele

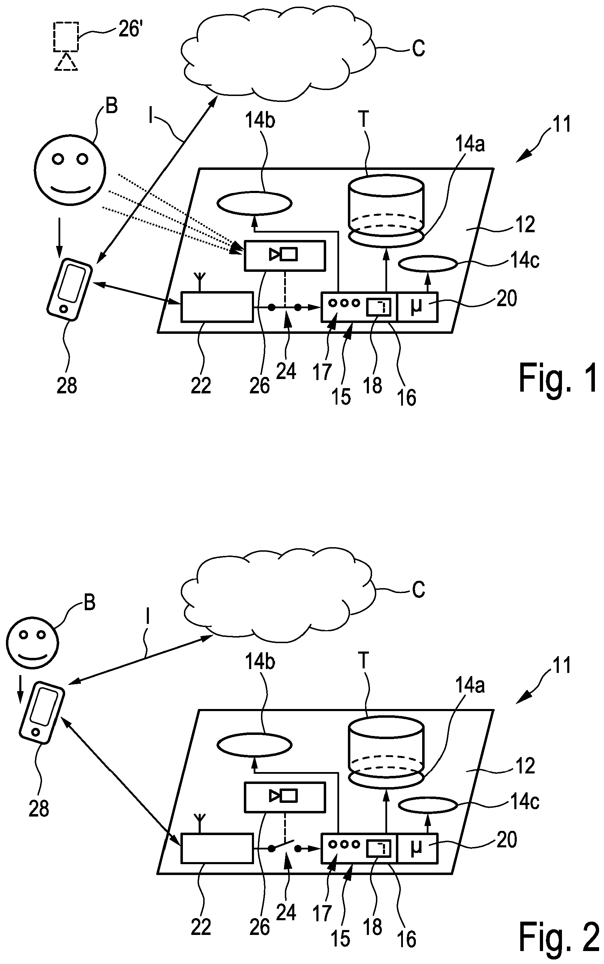

In der Fig. 1 ist ein erfindungsgemäßes Kochfeld 11 als zuvor genanntes Kochgerät dargestellt. Das Kochfeld 11 weist eine Kochfeldplatte 12 auf, unter der drei Induktionsspulen 14a, 14b und 14c als vorgenannte Heizeinrichtungen angeordnet sind. Die Induktionsspulen 14a bis 14c werden auf übliche Art und Weise mit Leistung versorgt, insbesondere von einer Leistungsversorgung mit Umrichtern, welche von einer Kochfeldsteuerung 15 mit einem Mikrocontroller 20 als Steuereinrichtung angesteuert wird. Der Einfachheit halber ist hier die Ansteuerung der Induktionsspulen 14a bis 14c direkt dargestellt. Die Kochfeldsteuerung weist auch noch ein Bedienfeld 16 auf als Bedieneinrichtung des Kochfelds 11. Das Bedienfeld 16 weist mehrere Bedienelemente 17 auf, die auf bekannte Art und Weise ausgebildet sein können, beispielsweise als Berührungsschalter oder als Touch-Display. Eine Anzeige 18 ist vorgesehen, entweder als an sich bekannte ggf. mehrstellige Sieben-Segment-Anzeige mit LED oder als LCD-Display oder Teil eines vorgenannten Touch-Displays.

Das Kochfeld 11 weist eine Kommunikationseinrichtung 22 auf, die durch das Antennen-Symbol als drahtlose Kommunikationseinrichtung ausgebildet ist. Sie kann beispielsweise mit WLAN bzw. Wi-Fi arbeiten, alternativ nach beliebigem Funkstandard, beispielsweise auch Bluetooth oder BLE. Die Kommunikationseinrichtung 22 wirkt über eine Weiterleitung 24, welche unterbrochen werden kann und deswegen hier als eine Art Schalter dargestellt ist, mit der Kochfeldsteuerung 15 zusammen. Insbesondere kann sie Bedienbefehle weitergeben, wie zuvor erläutert worden ist und wie nachfolgend im Detail dargelegt wird. Das Kochfeld 11 ist für einen vorgenannten Fernbedien-Modus ausgelegt.

Eine Unterbrechung der Weiterleitung 24 bzw. deren Schalten kann erfolgen durch Einwirken des Präsenzsensors 26, wie durch die gestrichelte Verbindung dargestellt ist. In der Praxis wirkt der Präsenzsensor 26 vorteilhaft mit der Kommunikationseinrichtung 22 oder mit der Kochfeldsteuerung 15 zusammen. Der Präsenzsensor kann beispielsweise eine Kamera sein, hier innerhalb des Kochfelds 11 dargestellt. Alternativ kann eine Kamera 26' auch außerhalb des Kochfelds 11 in einer Küche angeordnet sein, in der das Kochfeld 11 montiert ist. Die externe Kamera 26' kann dann über eine Funkverbindung oder drahtgebunden, beispielsweise auch mittels der Kommunikationseinrichtung 22 selbst, mit dem Kochfeld 11 kommunizieren und insbesondere Informationen zur Bestimmung einer ausreichenden Präsenz einer Bedienperson B am Kochfeld 11 übersenden. Das Einwirken der Präsenz der Bedienperson B am Kochfeld 11, welche in der Fig. 1 durch eine Entfernung von weniger als vorzugsweise 3 m gegeben sein kann, beispielsweise weil die Bedienperson B direkt vor dem Kochfeld 11 steht, ist durch die drei gepunkteten Pfeile hin zum Präsenzsensor 26 dargestellt. Somit ist der vorgenannte erfindungsgemäße 1. Fall gegeben.

Anstelle einer Kamera als Präsenzsensor 26 können auch andere der vorgenannten Möglichkeiten genutzt werden, so kann auch eine Bedienung an der Kochfeldsteuerung 15 bzw. am Bedienfeld 16 als eine solche Präsenz gewertet werden. Auch eine Topferkennung mittels einer der Induktionsspulen 14a bis 14c, welche dem Fachmann bekannt ist, kann verwendet werden. Wenn ein Topf T auf einer Induktionsspule, wie hier beispielsweise auf der Induktionsspule 14a, von der Bedienperson B bewegt wird, so kann dies an der Induktionsspule 14 selbst erkannt werden und als sichere Präsenz der Bedienperson B am Kochfeld 11 gewertet werden.

Die Bedienperson B kann mittels eines Smartphones 28 als vorgenannte externe Bedieneinrichtung im Fernbedien-Modus Bedienbefehle an das Kochfeld 11 geben bzw. an die Kommunikationseinrichtung 22 senden, die diese dann nach Maßgabe einer erkannten Präsenz gemäß Fig. 1 an die Kochfeldsteuerung 15 weitergibt. Somit kann beispielsweise die Induktionsspule 14a mit dem Topf T darauf von der Bedienperson B auch alleine über das Smartphone 28 bedient werden, insbesondere hinsichtlich ihrer Leistung beliebig verändert werden. Da der 1. Fall gilt ist dies möglich.

Dargestellt ist auch eine Internetverbindung I des Smartphones 28 mit einer Cloud C. Dadurch wird ermöglicht, dass beispielsweise Kochprogramme odgl. aus der Cloud C auf das Smartphone 28 geladen werden, dort möglicherweise modifiziert werden, und dann entweder durch Eingriff der Bedienperson B selbst oder von einem auf dem Smartphone 28 laufenden Kochprogramm als Bedienbefehle an die Kommunikationseinrichtung 22 zur Umsetzung durch die Kochfeldsteuerung 15 gegeben werden. Weitere Möglichkeiten des Zusammenwirkens zwischen Smartphone 28 und der Cloud C sind zuvor erläutert worden.

In der Fig. 2 ist nun durch erheblich kleinere Darstellung der Bedienperson B veranschaulicht, wie sich diese samt dem Smartphone 28 vom Kochfeld 11 entfernt hat, insbesondere über die vorgenannte Entfernung von 3 m oder sogar 5 m hinaus. Somit ist der vorgenannte erfindungsgemäße 2. Fall gegeben. Auf dem Smartphone 28 kann beispielsweise ein Telefonat eingegangen sein, welches die Bedienperson annimmt und sich dazu vom Kochfeld 11 entfernt, also nicht mehr präsent ist. Dann kann sie einen Ablauf, insbesondere einen Kochvorgang im Topf T auf der Induktionsspule 14a, nicht mehr überwachen und eine möglicherweise auftretende kritische Situation nicht erkennen. Der Präsenzsensor 26 im Kochfeld 11, alternativ eine außerhalb angeordnete Kamera 26', können nicht nur die Präsenz dieser speziellen Bedienperson B am Kochfeld 11 nicht mehr erfassen, sondern keinerlei Präsenz irgendeiner Person, ob diese nun das Kochfeld 11 zuvor bedient hat oder nicht oder es bedienen möchte oder nicht. Somit weist das Smartphone 28 zwar auch im Falle des Erkennens der nicht mehr vorhandenen Präsenz der Bedienperson B am Kochfeld 11 eine intakte Verbindung zur Kommunikationseinrichtung 22 auf, allerdings hat der Präsenzsensor 26 die Weiterleitung 24 getrennt. Vorteilhaft erfolgt die Trennung in dem Moment, in dem der Präsenzsensor 26 erkennt, dass die Bedienperson B zu weit vom Kochfeld 11 bzw. nicht mehr nahe genug am Kochfeld 11 ist. Dies kann mit einer üblichen Abtastrate der Präsenzsensoreinrichtung erfolgen, die beispielsweise im Bereich von unter 1 sek bis zu 1 sek liegen oder bis zu 10 sek reichen kann. Alternativ kann allgemein vorgesehen sein, dass der Präsenzsensor 26 zwar erkennt, dass sich die Bedienperson B vom Kochfeld 11 entfernt hat. Solange aber kein Bedienbefehl vom Smartphone 28 kommt, braucht nichts am Zustand geändert zu werden. Bevorzugt wird jedoch die zuvor beschriebene andere Möglichkeit.

Wird nun entweder direkt von der Bedienperson B am Smartphone 28 ein Bedienbefehl eingegeben, möglicherweise sogar unbeabsichtigt, oder von einem darauf ablaufenden automatischen Kochprogramm, möglicherweise in Zusammenarbeit mit der Cloud C, so wird im in Fig. 2 dargestellten Ausführungsbeispiel dieser Bedienbefehl aufgrund der getrennten Weiterleitung 24 gar nicht an die Kochfeldsteuerung 15 weitergegeben. Die Kochfeldsteuerung 15 setzt diesen Befehl jedenfalls nicht um. Dies ist die erfindungsgemäße Sicherheitsmaßnahme, da die Bedienperson B offensichtlich nicht überprüfen kann, ob durch diesen Bedienbefehl ausgelöst ein kritischer bzw. gefährlicher Zustand am Kochfeld 11 eintreten könnte. In Abwandlung dieses Verfahrens könnte auch vorgesehen sein, dass die Weiterleitung sozusagen in Aufmerksamkeit versetzt wird, aber nur dann getrennt wird bzw. ein Bedienbefehl vom Smartphone 28 dann nicht mehr weiter an die Kochfeldsteuerung 15 gegeben wird oder nicht mehr von dieser ausgeführt wird, wenn dieser Bedienbefehl eine Erhöhung der Leistung der Induktionsspule 14b für den Topf T zur Folge hätte. Ein Reduzierung der Leistung der Induktionsspule 14a als externer Bedienbefehl kann dann noch von der Kochfeldsteuerung 15 umgesetzt werden, da dadurch deren Heizleistung sinkt und somit die Gefahr eines kritischen Zustands am Kochfeld 11 zumindest verringert wird, wenngleich möglicherweise nicht vollständig beseitigt wird. Ein Bedienbefehl zum Ausschalten der Induktionsspule 14a würde natürlich sinnvollerweise auch umgesetzt werden, da damit ja eine nochmals weitere Reduzierung eines Risikos einer gefährlichen Situation gegeben wäre. Ein solcher externer Bedienbefehl zum Reduzieren der Leistung oder zum Abschalten der Induktionsspule 14a kann von der Bedienperson B möglicherweise während der fehlenden Präsenz bewusst eingegeben worden sein als Sicherheitsmaßnahme. Dann ist es vorteilhaft, wenn dieser auch so umgesetzt wird zum Reduzieren der Gefahr. So kann die Bedienperson auch aus größerer Entfernung aus Sicherheitsgründen die Leistung für die Induktionsspule 14a von der an der Anzeige 18 dargestellten Leistungsstufe 7 beispielsweise auf eine Leistungsstufe 3 oder 4 reduzieren. Damit wird der Topf T zwar noch warm oder heiß gehalten, es können aber keine kritischen Zustände mehr auftreten. Selbst Nudelwasser, das überzukochen droht, kocht bei einer derartigen Leistungsstufe üblicherweise nicht mehr auf.

Anstelle eines Kochfelds 11 könnte auch ein Backofen das erfindungsgemäße Kochgerät bilden, alternativ ein Dampfgarer, ein Grill odgl.. Auch bei diesen Kochgeräten kann eine externe Bedienung mit einem Smartphone odgl. von Vorteil sein, insbesondere um Kochprogramme bezüglich Leistungs-Zeit-Profil durchzuführen. Auch dort ist dann vorteilhaft vorgesehen, dass zumindest zur Erhöhung einer Leistung an einer Heizeinrichtung die Präsenz einer Bedienperson notwendig ist, zumindest im Zeitpunkt dieser gewünschten Leistungserhöhung.

Als weitere Sicherheitsmaßnahme ist es möglich, dass die Kochfeldsteuerung 15 in dem Fall, dass der Präsenzsensor 26 keine Präsenz der Bedienperson B am Kochfeld 11 mehr feststellt, automatisch eine Leistung der Induktionsspule 14a reduziert, die zuvor mittels des Smartphone 28 bedient worden ist. Eine Leistungsreduzierung kann um die vorgenannten Werte erfolgen, dies sollte aber ausreichend sein, um eine gefährliche Situation zu vermeiden. So sollte eine Leistung um mindestens 20% bis 50% reduziert werden oder auf 1% oder 10% bis maximal 50% der maximalen Heizleistung der Induktionsspule 14a reduziert werden. Eine Erhöhung der Leistung von extern ist aber in keinem Fall mehr möglich. So kann bei einer automatischen Reduzierung der Leistung aus Sicherheitsgründen die Leistung für die Induktionsspule 14a von der an der Anzeige 18 dargestellten Leistungsstufe 7 beispielsweise automatisch auf eine Leistungsstufe 3 oder 4 reduziert werden, ähnlich wie zuvor beschrieben.

Wird nach der fehlenden Präsenz der Bedienperson B am Kochfeld 11 gemäß Fig. 2 festgestellt, dass die Bedienperson B nun gemäß Fig. 1 wieder am Kochfeld 11 ist, beispielsweise weil ein Bedienbefehl eingegeben worden ist oder weil es eine Kamera 26' erkannt hat, so können entweder wieder der Betriebszustand des Kochfelds 11 und insbesondere der Induktionsspule 14a eingestellt werden, wie er bei Entdecken der fehlenden Präsenz geherrscht hat. Alternativ kann notwendig sein, dass eine Bedienperson B durch ein Signal, beispielsweise optisch und/oder akustisch an dem Bedienfeld 16, darauf aufmerksam gemacht wird, dass eine Bestätigung der Präsenz erforderlich ist. Dann muss beispielsweise eines der Bedienelemente 17 von der Bedienperson B bedient werden, damit dann wieder ein normaler Bedienvorgang mittels des Smartphone 28 als externe Bedieneinrichtung möglich ist.

In weiterer Ausgestaltung der Erfindung ist es auch möglich, dass das Smartphone 28 nicht benötigt wird als externe Bedieneinrichtung, sondern die Cloud C mittels einer Internetverbindung I direkt an die Kommunikationseinrichtung 22 diese externe Bedieneinrichtung bildet. Das Auswählen eines Kochprogramms aus der Cloud C kann von einer Bedienperson B am Bedienfeld 16 vorgenommen worden sein. Dann gilt, dass Bedienbefehle aus der Cloud C zwar an die Kochfeldsteuerung 15 gegeben werden, eine Erhöhung einer Leistung an einer gesteuerten Induktionsspule 14a aber nur dann durchgeführt wird, wenn eine Bedienperson B am Kochfeld 11 präsent ist.

## Patentansprüche

1. Verfahren zum Betrieb eines Kochgeräts mit einer externen Bedieneinrichtung, wobei das Kochgerät aufweist:
- mindestens eine Heizeinrichtung,
- eine Steuereinrichtung,
- mindestens eine Präsenzsensoreinrichtung für das Erkennen einer Präsenz einer Bedienperson,
- eine Kommunikationseinrichtung,
wobei die mindestens eine Präsenzsensoreinrichtung und die Kommunikationseinrichtung mit der Steuereinrichtung verbunden sind, und
wobei die Steuereinrichtung eine Leistungszufuhr zu der Heizeinrichtung steuert, **gekennzeichnet durch** die folgenden Schritte:
- das Kochgerät wird eingeschaltet oder ist bereits eingeschaltet,
- eine Bedienperson stellt direkt an dem Kochgerät einen Fernbedien-Modus ein für eine Heizeinrichtung für eine Eingabemöglichkeit für die externe Bedieneinrichtung, wobei die externe Bedieneinrichtung mit der Kommunikationseinrichtung zusammenwirkt um Bedienbefehle an die Kommunikationseinrichtung zu senden zur Ausführung an der Heizeinrichtung durch die Steuereinrichtung,
- die Präsenzsensoreinrichtung erfasst die Präsenz der Bedienperson an dem Kochgerät oder nahe dem Kochgerät, wobei dabei eine Entfernung zwischen der Bedienperson und dem Kochgerät bzw. der Präsenzsensoreinrichtung von weniger als 5 m als Präsenz der Bedienperson an dem Kochgerät gewertet wird,
- in einem 1. Fall, dass eine Präsenz der Bedienperson an dem Kochgerät erfasst wird, ist ein Bedienen des Kochgeräts mittels der externen Bedieneinrichtung möglich und Bedienbefehle der externen Bedieneinrichtung werden von der Steuereinrichtung ausgeführt,
- in einem 2. Fall, dass keine Präsenz der Bedienperson an dem Kochgerät erfasst wird, werden keine Bedienbefehle der externen Bedieneinrichtung mehr von der Steuereinrichtung ausgeführt um eine Erhöhung einer Leistung einer Heizeinrichtung des Kochgeräts zu bewirken.

2. Verfahren nach Anspruch 1, **dadurch gekennzeichnet, dass** eine Bedienung direkt am Kochgerät mit Vorrang vor einer Bedienung mittels der externen Bedieneinrichtung ausgeführt wird.

3. Verfahren nach Anspruch 1 oder 2, **dadurch gekennzeichnet, dass** eine Entfernung zwischen der Bedienperson und dem Kochgerät bzw. der Präsenzsensoreinrichtung, die als Präsenz der Bedienperson am Kochgerät gewertet wird, einstellbar ist bis maximal 5 m, insbesondere bis maximal 3 m.

4. Verfahren nach einem der vorhergehenden Ansprüche, **dadurch gekennzeichnet, dass** im 2. Fall als Bedienbefehl der externen Bedieneinrichtung von der Steuereinrichtung nur noch eine Verringerung einer Leistung der Heizeinrichtung zugelassen und ausgeführt wird.

5. Verfahren nach einem der vorhergehenden Ansprüche, **dadurch gekennzeichnet, dass** im 2. Fall eine Leistung der Heizeinrichtung automatisch reduziert wird, wenn die Präsenzsensoreinrichtung keine Präsenz der Bedienperson am Kochgerät mehr feststellt, vorzugsweise um mindestens 20% bis 50% reduziert wird oder auf 1% bis 50% der Maximalleistung der Heizeinrichtung reduziert wird.

6. Verfahren nach einem der vorhergehenden Ansprüche, **dadurch gekennzeichnet, dass** in dem Fall, dass nach Unterbrechung der Präsenz der Bedienperson am Kochgerät als 2. Fall erneut als 1. Fall eine Präsenz der Bedienperson am Kochgerät festgestellt wird,
- entweder direkt ein vorheriger Betriebszustand des Kochgeräts bzw. der Heizeinrichtung eingestellt wird, wie er bei Eintritt des 2. Falls bei Feststellen der fehlenden Präsenz der Bedienperson am Kochgerät geherrscht hat,
- oder eine neue Bedienung zur Bestätigung durch die Bedienperson notwendig ist, insbesondere an dem Kochgerät, damit dann der vorherige Betriebszustand des Kochgeräts bzw. der Heizeinrichtung wieder hergestellt wird, wobei vorzugsweise eine entsprechende Information als Aufforderung und/oder zur Bestätigung an die Bedienperson gegeben wird.

7. Verfahren nach einem der vorhergehenden Ansprüche, **dadurch gekennzeichnet, dass** die Präsenzsensoreinrichtung direkt an oder in dem Kochgerät angeordnet ist, wobei vorzugsweise eine im Kochgerät integrierte Präsenzsensoreinrichtung zum Erfassen einer Bedienung durch eine Bedienperson und/oder einer Veränderung einer Position und/oder eines Gewichts eines aufgestellten Kochgeschirrs oder zum Erkennen von Personen und/oder Bewegungen im Bereich um das Kochgerät vorgesehen ist.

8. Verfahren nach einem der Ansprüche 1 bis 6, **dadurch gekennzeichnet, dass** die Präsenzsensoreinrichtung in einem Abstand von weniger als 5 m Entfernung zu dem Kochgerät angeordnet ist, vorzugsweise weniger als 3 m, wobei sie insbesondere nicht direkt an dem Kochgerät vorgesehen ist.

9. Verfahren nach einem der vorhergehenden Ansprüche, **dadurch gekennzeichnet, dass** mit der externen Bedieneinrichtung genau eine einzige Heizeinrichtung gesteuert wird, vorzugsweise nach expliziter Zuordnung der externen Bedieneinrichtung zu genau dieser Heizeinrichtung.

10. Verfahren nach einem der Ansprüche 1 bis 8, **dadurch gekennzeichnet, dass** mit der externen Bedieneinrichtung mehrere Heizeinrichtungen gesteuert werden, vorzugsweise nach expliziter Zuordnung der externen Bedieneinrichtung zu genau diesen Heizeinrichtungen.

11. Verfahren nach einem der Ansprüche 1 bis 8, **dadurch gekennzeichnet, dass** mit der externen Bedieneinrichtung das gesamte Kochgerät gesteuert wird, vorzugsweise nach expliziter Zuordnung der externen Bedieneinrichtung zu dem gesamten Kochgerät.

12. Verfahren nach einem der vorhergehenden Ansprüche, **dadurch gekennzeichnet, dass** eine Präsenz der Bedienperson am Kochgerät wiederholend bzw. wiederholt erfasst wird, vorzugsweise regelmäßig wiederholt erfasst wird, insbesondere in zeitlichen Abständen von weniger als 1 min, vorzugsweise weniger als 10 sek.

13. Verfahren nach einem der vorhergehenden Ansprüche, **dadurch gekennzeichnet, dass** die externe Bedieneinrichtung ein mobiles Endgerät ist, vorzugweise ein Smartphone oder ein Tablet-Computer.

14. Verfahren nach einem der Ansprüche 1 bis 12, **dadurch gekennzeichnet, dass** die externe Bedieneinrichtung eine intelligente Maschine zur Unterstützung der Bedienperson bzw. eine externe automatische Steuerung, ein Funknetzwerk oder das Internet bzw. eine Cloud ist.

15. Kochgerät mit:
- mindestens einer Heizeinrichtung,
- einer Steuereinrichtung,
- einer Präsenzsensoreinrichtung für das Erkennen einer Präsenz einer Bedienperson,
- einer Kommunikationseinrichtung,
wobei die Präsenzsensoreinrichtung und die drahtlose Kommunikationseinrichtung mit der Steuereinrichtung verbunden sind, und wobei die Steuereinrichtung eine Leistungszufuhr zu der Heizeinrichtung steuert,
**dadurch gekennzeichnet, dass** die Steuereinrichtung dazu ausgebildet ist, mit einem externen Bediengerät ein Verfahren nach einem der vorhergehenden Ansprüche durchzuführen.
